(19) Europäisches Patentamt
European Patent Office
Office européen des brevets

(11) **EP 1 685 012 B1**

(12) **EUROPÄISCHE PATENTSCHRIFT**

(45) Veröffentlichungstag und Bekanntmachung des Hinweises auf die Patenterteilung:
**24.11.2010 Patentblatt 2010/47**

(21) Anmeldenummer: **04786734.6**

(22) Anmeldetag: **10.09.2004**

(51) Int Cl.:
*B60S 1/32* *(2006.01)*     *G06T 17/00* *(2006.01)*

(86) Internationale Anmeldenummer:
**PCT/DE2004/002012**

(87) Internationale Veröffentlichungsnummer:
**WO 2005/049397 (02.06.2005 Gazette 2005/22)**

(54) **VERFAHREN ZUR BESTIMMUNG EINER ROHFORM EINES ELASTISCHEN BAUTEILS**

METHOD FOR DETERMINING A BLANK FORM OF AN ELASTIC COMPONENT

PROCEDE PERMETTANT DE DETERMINER UNE FORME BRUTE D'UN COMPOSANT ELASTIQUE

(84) Benannte Vertragsstaaten:
**DE FR GB IT**

(30) Priorität: **08.11.2003 DE 10352080**

(43) Veröffentlichungstag der Anmeldung:
**02.08.2006 Patentblatt 2006/31**

(73) Patentinhaber: **ROBERT BOSCH GMBH**
**70442 Stuttgart (DE)**

(72) Erfinder:
• **WEILER, Michael**
**363-9 Chungchongbuk-do (KR)**
• **ZIMMER, Joachim**
**77880 Sasbach (DE)**

(56) Entgegenhaltungen:
**DE-A1- 10 053 299     US-A- 3 480 985**
**US-A- 4 318 201**

**Beschreibung**

Stand der Technik

Die Erfindung geht aus von einem Verfahren zur Bestimmung einer Rohform eines elastischen Bauteils nach dem Oberbegriff des Anspruchs 1.

Zur Bestimmung einer Rohform eines elastischen, als Blattfeder mit konstantem Querschnitt ausgebildeten gelenkfreien Wischarms unter der Vorgabe einer Zielform, die das Bauteil unter der Einwirkung einer vorgegebenen deformierenden Kraft annehmen soll, ist ein Verfahren bekannt, bei dem eine Rohform durch eine Vorbiegung bestimmt ist, deren Verlauf demjenigen eines elastischen, einseitig eingespannten Biegebalkens entspricht und deren Stärke durch eine Auflagekraft bestimmt ist und mit Hilfe bekannter Formeln berechenbar ist (vgl. Dubbel, Taschenbuch für den Maschinenbau, 19. Auflage Springer-Verlag Berlin, Heidelberg 1997).

US-A-3480985 offenbart den Oberbegriff des Anspruchs 1.

Vorteile der Erfindung

Die Erfindung geht aus von einem Verfahren zur Bestimmung einer Rohform eines elastischen Bauteils, insbesondere eines gelenkfreien Wischarms, unter der Vorgabe einer Zielform, die das elastische Bauteil unter der Einwirkung zumindest einer vorgegebenen ersten Kraft annehmen soll.

Es wird vorgeschlagen, dass eine der vorgegebenen ersten Kraft zumindest im Wesentlichen entgegengesetzte Gegenkraft an ein Arbeitsmodell des elastischen Bauteils angesetzt wird, dessen Modellrohform der Zielform zumindest ähnlich ist. Dadurch kann die Rohform vorteilhaft zielgerichtet, unter Vermeidung mehrerer Versuche und ohne großen mathematischen Aufwand bestimmt werden. Es kann eine Rohform ermittelt werden, die sowohl ein Design der Zielform betreffende Vorgaben, als auch eine Funktion des elastischen Bauteils betreffende Vorgaben erfüllt. Bei einem gelenkfreien Wischarm kann vorteilhaft eine hinsichtlich einer Wischqualität und eines Wischkomforts optimierte Auflagekraft bei einer durch Aerodynamik und Design diktierten Zielform des Wischarms, die dieser in einem auf ein Kraftfahrzeug montierten Zustand annimmt, erreicht werden. Hinsichtlich aerodynamischer Eigenschaften des Wischarms ist insbesondere eine Gestaltung eines Zwischenraums zwischen dem Wischarm in seiner Zielform und einem an dem Wischarm montierten, auf einer Fahrzeugscheibe aufliegenden Wischblatt von entscheidender Bedeutung.

Unter einer Rohform soll eine Form des elastischen Bauteils verstanden werden, die dieses in einer im Wesentlichen kraftfreien Konfiguration annimmt. Unter einer Modellrohform soll eine Form des Arbeitsmodells verstanden werden, die dieses unter dem Einfluss einer Rohkraft annimmt, die insbesondere in einem ersten Verfahrensschritt zumindest im Wesentlichen Null ist, in Zwischenschritten jedoch auch endliche Werte annehmen kann. Es ist denkbar, das Verfahren mit einem dem elastischen Bauteil geometrisch zumindest im Wesentlichen ähnlichen Arbeitsmodell auszuführen, sofern die relevanten Kräfte den gleichen Ähnlichkeits- und Skalentransformationen unterworfen werden, die eine Modellrohform des Arbeitsmodells in eine Zielform des elastischen Bauteils überführen. Ebenfalls denkbar ist eine Durchführung des Verfahrens mit einem von einem Material des elastischen Bauteils verschiedenen elastischen Material des Arbeitsmodells, sofern die relevanten Kräfte mit dem Verhältnis der entsprechenden Elastizitätsmoduln multipliziert werden. Nach dem Hookeschen Gesetz ist eine Deformation eines elastischen Materials unter der Einwirkung einer Kraft stets proportional zu dieser Kraft. Daraus ergeben sich vielfältige Möglichkeiten einer extrapolativen Bestimmung einer Form, die ein elastisches Bauteil unter der Einwirkung einer Kraft annimmt. Unter dem Ansetzen einer Kraft, insbesondere der Gegenkraft, sollen daher neben einer physikalischen Ausübung der Kraft auch teilweise oder vollständige mathematische Simulationen der Kraft und Verfahren, die Extrapolations- und/oder Skalierungsschritte beinhalten, verstanden werden.

In der Erfindung wird vorgeschlagen, dass im Verfahren die Gegenkraft in Zwischenschritten gesteigert wird. Durch die Möglichkeit, in Zwischenschritten Anpassungen vorzunehmen, kann eine verbesserte Kontrolle einer Deformationsbewegung erreicht werden. Informationen über Zwischenformen können vorteilhaft erfasst werden.

Wird nach zumindest einem Zwischenschritt eine aktuelle Gegenkraft in ihrer Richtung zumindest teilweise abhängig von einer Deformation des Arbeitsmodells ausgerichtet, können nichtlineare Effekte weitgehend vermieden werden und es kann erreicht werden, dass der Deformationsprozess mit einem elastischen Bauteil, dessen Form auf diese Weise bestimmt wurde, in jedem Zwischenschritt im Wesentlichen umkehrbar ist.

Für eine Ausgestaltung des Verfahrens, in dem das Arbeitsmodell reell deformiert wird, wird vorgeschlagen, dass das Arbeitsmodell in der Rohform durch Erhitzen und Abkühlen fixiert wird. Dabei ist ein Erhitzen des Arbeitsmodells in der Rohform bis in einen Temperaturbereich knapp unterhalb eines Schmelzpunktes eines Materials des Arbeitsmodells zum Lösen innerer Materialspannungen des Arbeitsmodells sinnvoll. Besonders vorteilhaft ist diese Ausgestaltung des Verfahrens zur Herstellung von Prototypen einsetzbar.

Zudem wird vorgeschlagen, dass eine Deformation des Arbeitsmodells unter der Gegenkraft simuliert wird. Materialien und Formen können einfach und kostengünstig durch eine Änderung von Parametern eines Simulationsprogramms variiert werden und es kann auf erprobte numerische Verfahren zurückgegriffen werden. Besonders vorteilhaft lässt sich in der numerischen Simulation eine Finite-Elemente-Methode einsetzen. Dabei ist sowohl eine lineare als auch eine nichtlineare Finite-Elemente-Methode denkbar. Dabei wird die Form eines elastischen Bauteils durch einfache dreidimensionale Bausteine approximiert, deren Deformation unter dem Einfluss einfacher Kraftfelder an ihren Grenzflächen analytisch berechenbar ist. Eine Übersicht über Finite-Elemente-Methoden gibt das Lehrbuch "Finite-Elemente-Methoden" von Klaus-Jürgen Bathe, erschienen im Springer-Verlag Berlin-Heidelberg im Dezember 2001.

Nutzt die Finite-Elemente-Methode eine Unterteilung in Finite Elemente, in der zumindest eine Mehrzahl der Finiten Elemente höchstens zwei Trennflächen mit benachbarten Finiten Elementen teilt, kann vorteilhaft ein numerischer Aufwand reduziert werden. Ein besonders einfaches sequentielles Abarbeiten der Deformation einzelner Elemente wird vorteilhaft ermöglicht. Besonders in einer linearen Näherung für die Gleichungen der Deformation der Elemente kann das Problem der Berechnung der Rohform vorteilhaft auf das Diagonalisieren einer Bandmatrix reduziert werden und es kann auf schnelle numerische Methoden zurückgegriffen werden. Insbesondere bei länglichen Bauteilen, wie zum Beispiel gelenkfreien Wischarmen, kann so eine hohe Präzision bei einer geringen Anzahl von Elementen und Berechnungsschritten erreicht werden.

Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:

Fig. 1     ein Flussdiagramm zu einem Verfahren zur Be- stimmung einer Rohform eines gelenkfreien Wi- scharms,
Fig. 2     ein Arbeitsmodell eines Wischarms in einer Draufsicht,
Fig. 3     das Arbeitsmodell aus Fig. 2 in einer Modell- rohform und mit einer angesetzten Gegenkraft,
Fig. 4     einen gelenkfreien Wischarm in einer Rohform und unter der Einwirkung einer Auflagekraft,
Fig. 5     eine schematische Darstellung zu einer Test- phase des Verfahrens,
Fig. 6     eine schematische Darstellung zu einer Auftei- lung des Arbeitsmodells in Finite Elemente,
Fig. 7     eine schematische Darstellung zu einer Defor- mation eines Finiten Elements unter der Wir- kung einer Längskraft,
Fig. 8     eine schematische Darstellung zu einer Defor- mation eines Finiten Elements unter der Wir- kung einer Querkraft,
Fig. 9     eine schematische Darstellung zu einer Defor- mation eines Finiten Elements unter der Wir- kung eines Biegemoments und
Fig. 10    eine schematische Darstellung zu einer Berech- nung einer gesamten Deformation eines Finiten Elements des Arbeitsmodells aus Fig. 1 bis 9.

Beschreibung des Ausführungsbeispiels

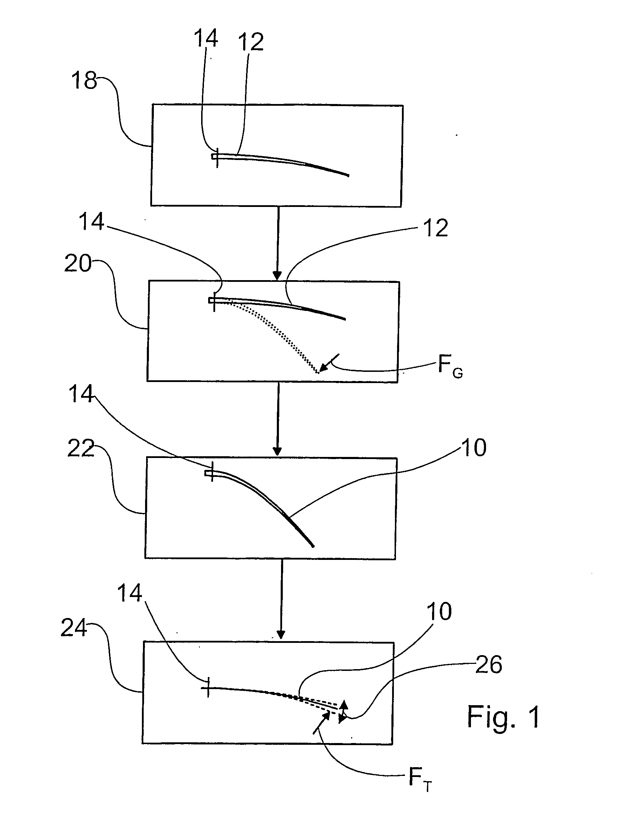

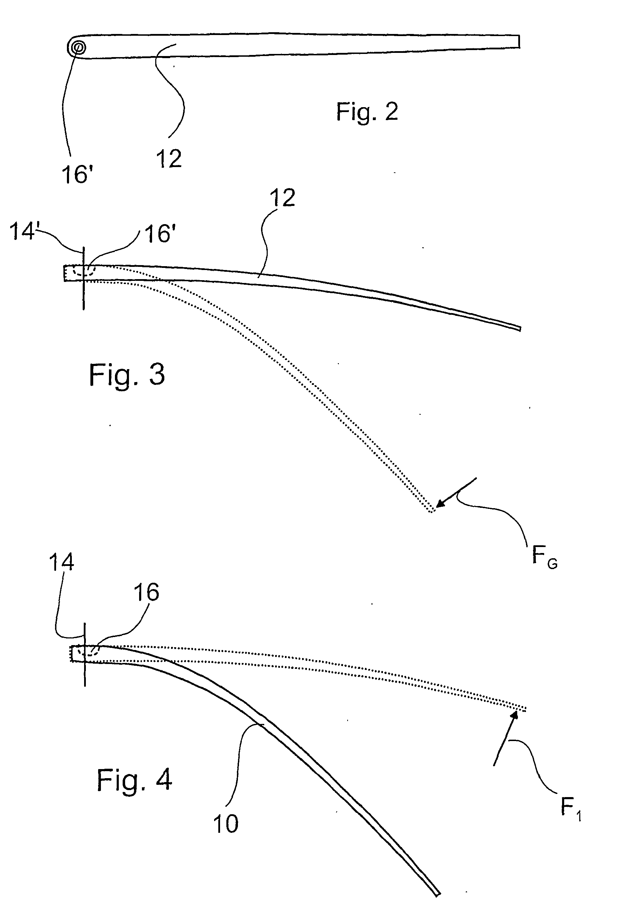

Figur 1 zeigt ein Flussdiagramm zu einem Verfahren zur Bestimmung einer Rohform eines als gelenkfreier Wischarm 10 ausgebildeten elastischen Bauteils unter der Vorgabe einer Zielform, die der gelenkfreie Wischarm 10 unter der Einwirkung einer vorgegebenen ersten Kraft $F_1$, die eine Gegenkraft zu einer Auflagekraft des Wischarms 10 auf einer Kraftfahrzeugscheibe darstellt, annehmen soll (Fig. 4). In einem Definitionsschritt 18 werden Parameter der gewünschten Zielform in einen Speicher einer Recheneinheit eingespeist, welche mit Hilfe einer Finite-Elemente-Methode eine Deformation eines simulierten Arbeitsmodells 12 des gelenkfreien Wischarms 10 bei einer der angesetzten ersten Kraft $F_1$ entgegengesetzten Gegenkraft $F_G$ simuliert (Fig. 3). Eine Modellrohform, die das Arbeitsmodell 12 in einer kraftfreien Konfiguration annimmt, ist als durchgezogene Linie in Fig. 3 dargestellt und ist identisch mit der Zielform des gelenkfreien Wischarms 10, die als gepunktete Linie in Fig. 4 dargestellt ist. Zur Simulation der Deformation werden Randbedingungen derart gewählt, dass eine Befestigungsebene 14' des Arbeitsmodells 12 fixiert bleibt. Die Befestigungsebene 14' entspricht einer Befestigungsebene 14 des Wischarms, die in einem Bereich des Wischarms 10 liegt, in welchem letzterer eine Öffnung 16 zum Durchführen und Verschrauben einer Antriebswelle aufweist. In einer Deformationsphase 20 wird die Gegenkraft $F_G$ in mehreren Zwischenschritten bis zu ihrem Endwert gesteigert, wobei in jedem Zwischenschritt eine aktuelle Gegenkraft $F_G$ abhängig von der Deformation des Arbeitsmodells 12 senkrecht zu einer Oberfläche desselben ausgerichtet wird. Die Parameter der Form, die das Arbeitsmodell 12 unter der Einwirkung der Gegenkraft $F_G$ bei ihrem Endwert annimmt, werden in einem Ausleseschritt 22 ausgelesen und stellen die gewünschte Information über die Rohform des gelenkfreien Wischarms 10 dar.

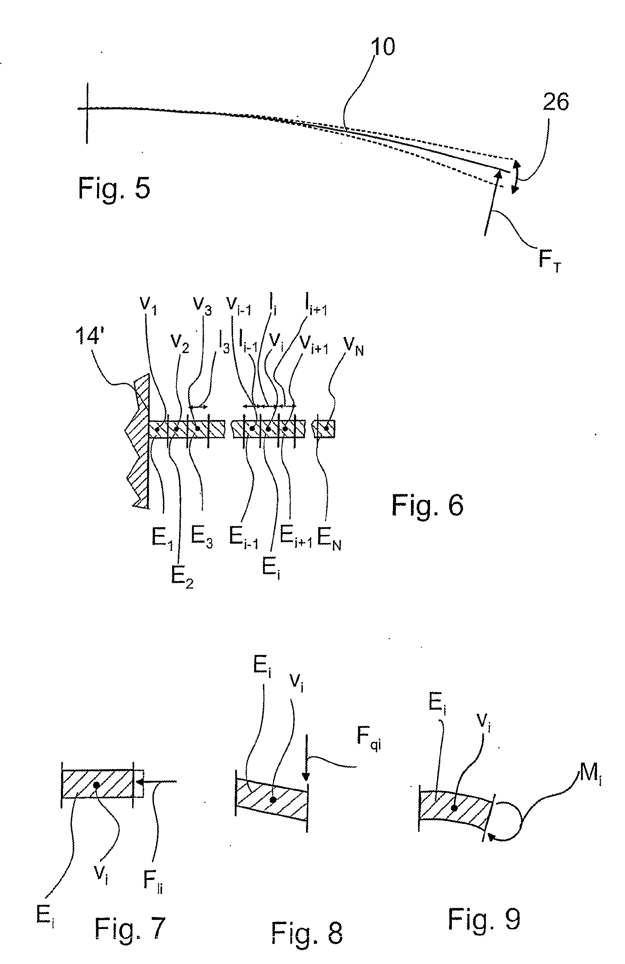

Diese Informationen können nun in einem Testschritt 24 zur Simulation von Elastizitätseigenschaften eines Wischarms 10 mit der berechneten Rohform genutzt werden. Dazu wird die Einwirkung einer Testkraft $F_T$ auf den Wischarm 10 mit der in den ersten Verfahrensschritten 18, 20, 22 ermittelten Rohform simuliert (Fig. 5). Wird die Testkraft $F_T$ graduell von Null auf den Wert der ersten Kraft $F_1$ gesteigert, wobei die Testkraft $F_T$ in jedem Zwischenschritt senkrecht zur Oberfläche des Wischarms 10 ausgerichtet wird, deformiert sich der Wischarm 10 von der Rohform in die Zielform.

Zur Ermittlung der Auflagekraftvariationen während einer Hubbewegung 26 wird die Testkraft $F_T$ leicht um die erste Kraft $F_1$ variiert und eine Auslenkung als Funktion der Testkraft $F_T$, also eine invertierte Federkennlinie des Wischarms 10, wird aufgenommen (Fig. 6). Vorteilhaft ist eine flache Federkennlinie im Bereich der Auflagekraft, weil die Hubbewegungen 26 in diesem Fall nur kleine Variationen der Auflagekraft erzeugen und damit nur einen unwesentlichen Einfluss auf eine Wischqualität haben.

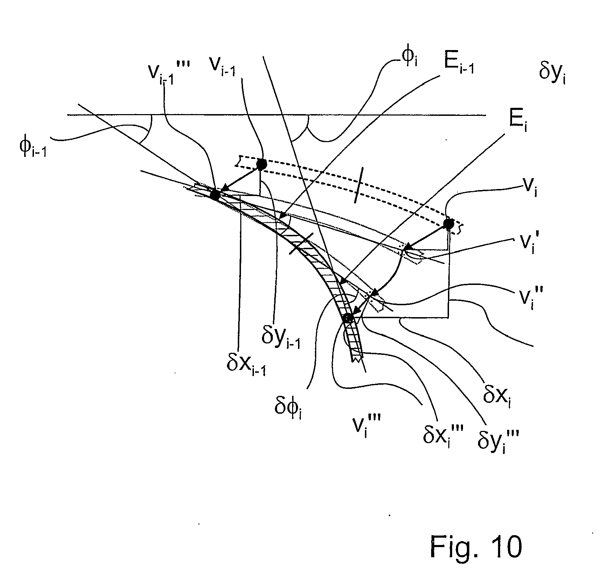

Fig. 10 zeigt eine schematische Darstellung zu einer Simulation der Deformation eines Finiten Elements $E_i$ des Arbeitsmodells 12. Der Simulationsalgorithmus geht von einer festen Einspannung an der Befestigungsebene 14' des Arbeitsmodells 12 aus. Dort sind eine Durchbiegung und eine Winkeländerung stets Null. Das Arbeitsmodell 12 wird entlang seiner Längserstreckung in Finite Elemente $E_1$ - $E_N$ aufgeteilt, deren Verformungen einzeln berechnet und aufaddiert werden (Fig. 6). Jedes der Finiten Elemente $E_2$ - $E_{N-1}$ teilt zwei Trennflächen mit benachbarten Finiten Elementen $E_1$ - $E_N$, während die an einem Rand gelegenen Finiten Elemente $E_1$ und $E_N$ nur jeweils ein benachbartes Finites Element aufweisen. In Bereichen mit starker Querschnitts- oder Belastungsänderung werden feinere Unterteilungen gewählt als in solchen mit annähernd gleichem Querschnitt und gleicher Belastung. Die Zielform des Wischarms 10 wird durch die Modellrohform des Arbeitsmodells 12 als Stufenform angenähert, indem man in der Modellierung annimmt, dass die Finiten Elemente $E_i$ über ihre Länge $l_i$ gleichbleibende Querschnitte aufweisen.

Die Lage jedes Finiten Elements $E_1$ - $E_N$ wird in einem Schwerpunkt $v_1$ - $v_N$ mit Schwerpunktskoordinaten $x_1$ - $x_N$, $y_1$ - $y_N$ und in einem Winkel $\phi_1$ - $\phi_N$ gespeichert. An den Grenzflächen wirkt auf jedes Finite Element $E_i$ eine Längskraft $F_{li}$ (Fig. 7), eine Querkraft $F_{qi}$ (Fig. 8) und ein Biegemoment $M_i$ (Fig. 9). Das Biegemoment $M_i$ berechnet sich als Drehmoment gemäß $M_i = \Sigma_j F_j * s_{ij}$ aus den Kräften $F_j = F_{ij} + F_{qj}$ auf alle Finiten Elemente $E_j$, $j = 1 \dots N$ und aus den Abstandsvektoren $s_{ij} = v_i - v_j$ zwischen den Finiten Elementen i und j. Mit "*" wird hier das Vektorprodukt bezeichnet. Ausgehend vom Finiten Element $E_i$ an der Befestigungsebene 14' werden die Schwerpunkte $v_i$ und die Winkel $\phi_i$ für i = 2 ... N induktiv berechnet. Ausgehend von einer Verschiebung $\delta x_{i-1}$, $\delta y_{i-1}$ wird in einem ersten Schritt der Schwerpunkt $v_i$ des Finiten Elements $E_i$ um denselben Verschiebungsvektor verschoben und geht in einen Schwerpunkt $v_{i'}$ über (Fig. 10). Anschließend wird der Schwerpunkt $v_i'$ um eine Winkeländerung $\delta\phi_{i-1}$ um einen Schwerpunkt $v_{i-1}$ eines benachbarten Finiten Elements $E_{i-1}$ gedreht und geht in einen Schwerpunkt $v_i''$ über. Die Verformung des Finiten Elements $E_i$ mit konstantem Querschnitt unter der Wirkung einer Querkraft $F_{qi}$, einer Längskraft $F_{li}$ und eines äußeren Moments $M_i$ hängt von der Länge $l_i$ des Finiten Elements $E_i$, von einem Flächenmoment Ii der Querschnittsfläche $A_i$ des Finiten Elements $E_i$ und von einem materialabhängigen Elastizitätsmodul E ab. Speziell ergibt sich

$$\delta\phi_i = F_{qi} l_i^2 / (2 I_i E) + M_i l_i / (I_i E)$$

$$\delta y_i' = F_{qi} l_i^3 / (3 I_i E) + M_i l_i^2 / (2 I_i E)$$

$$\delta x_i' = F_{li} l_i / (A_i E).$$

Dabei beziehen sich die Verschiebungen $\delta_{xi}'$ und $\delta_{yi}'$ auf ein Koordinatensystem, dessen Abszisse tangential zum Verlauf einer Biegekurve des Arbeitsmodells 12 am Ort $v_i$ verläuft. Daraus ergeben sich ein neuer Winkel $\phi_i = \phi_{i-1} + \delta\phi_i$ und ein neuer Schwerpunkt $v_i'''$ mit den Koordinaten

$$x_i''' = x_i'' + \cos(\phi_i)\delta x_i' + \sin(\phi_i)\delta y_i'$$

und

$$y_i''' = y_i'' + \cos(\phi_i)\delta y_i' - \sin(\phi_i)\delta x_i'.$$

Zum Schließen des Induktionsschrittes fließen die Winkeländerung $\delta\phi_i$ und die elastischen Verschiebungen $\delta x_i = x_i''' - x_i$ und $\delta y_i = y_i''' - y_i$ in die Berechnung der Koordinaten und des Winkels zum nächsten Finiten Element $E_{i+1}$ ein.

Ist die Deformation aller N Finiten Elemente $E_1$ - $E_N$ abgeschlossen, werden die Winkel $\phi_1$ - $\phi_N$ und die Schwerpunkte $v_1'''$ - $v_N'''$ als Informationen für die Rohform des Wischarms (10) gespeichert.

In der Testphase 24 wird analog zu dem oben beschriebenen Finite-Elemente-Verfahren ein Wischarm 10 simuliert, der in einer kraftfreien Konfiguration durch die Finiten Elemente mit den Schwerpunkten $v_i'''$ - $v_N'''$ und den Winkeln $\phi_1$ - $\phi_N$ beschrieben ist.

Bezugszeichen

| | |
|---|---|
| 10 | Wischarm |
| 12 | Arbeitsmodell |
| 14 | Befestigungsebene |
| 16 | Öffnung |
| 18 | Definitionsschritt |
| 20 | Deformationsphase |
| 22 | Ausleseschritt |
| 24 | Testschritt |
| 26 | Hubbewegung |
| $E_i$ | Element Nr. i |
| $s_{ij}$ | Abstandsvektor |
| $F_i$ | Kraft |
| $F_G$ | Gegenkraft |
| $F_T$ | Testkraft |
| $M_i$ | Biegemoment auf $E_i$ |
| $F_{qi}$ | Querkraft auf $E_i$ |
| $F_{li}$ | Längskraft auf $E_i$ |
| $l_i$ | Länge von $E_i$ |
| $A_i$ | Querschnittsfläche von $E_i$ |
| $v_i$ | Schwerpunkt von $E_i$ |
| $x_i$ | Koordinate |
| $y_i$ | Koordinate |
| $\delta x_j$ | Änderung der Koordinate |
| $\delta y_i$ | Änderung der Koordinate |
| $\phi_i$ | Winkel |
| $\delta\phi_i$ | Änderung des Winkels |

**Patentansprüche**

1.  Verfahren zur Bestimmung einer Rohform eines elastischen und gelenkfreien Wischarms (10), unter der Vorgabe einer Zielform, die das elastische Bauteil unter der Einwirkung zumindest einer vorgegebenen ersten Kraft ($F_1$) annehmen soll, wobei eine der vorgegebenen ersten Kraft ($F_1$) zumindest im Wesentlichen entgegengesetzte Gegenkraft ($F_G$) an ein Arbeitsmodell (12) des elastischen Bauteils angesetzt wird, dessen Modellrohform der Zielform zumindest ähnlich ist, **dadurch gekennzeichnet, dass** die Gegenkraft ($F_G$) in Zwischenschritten gesteigert wird.

2.  Verfahren nach Anspruch 1, **dadurch gekennzeichnet, dass** nach zumindest einem Zwischenschritt eine aktuelle Gegenkraft ($F_G$) in ihrer Richtung zumindest teilweise abhängig von einer Deformation des Arbeitsmodells (12) ausgerichtet wird.

3.  Verfahren nach einem der vorhergehenden Ansprüche, **dadurch gekennzeichnet, dass** eine Deformation des Arbeitsmodells (12) unter der Gegenkraft ($F_G$) simuliert wird.

4. Verfahren nach Anspruch 3, **dadurch gekennzeichnet, dass** in der Simulation eine Finite-Elemente-Methode eingesetzt wird.

5. Verfahren nach Anspruch 4, **gekennzeichnet durch** eine Unterteilung in Finite Elemente, in der zumindest eine Mehrzahl der Finiten Elemente höchstens zwei Trennflächen mit benachbarten Finiten Elementen teilt.

6. Elastischer und gelenkfreier Wischarm (10), **gekennzeichnet durch** eine **durch** ein Verfahren nach einem der vorhergehenden Ansprüche bestimmte Rohform.

**Claims**

1. Method for determining a blank form of an elastic and non-articulated wiper arm (10) with the default of a target form which the elastic component is supposed to assume under the effect of at least one predefined initial force ($F_1$), a counterforce ($F_G$) at least essentially opposed to the predefined initial force ($F_1$) being applied to a working model (12) of the elastic component, whose model blank form is at least similar to the target form, **characterized in that** the counterforce ($F_G$) is increased in intermediate steps.

2. Method according to Claim 1, **characterized in that** at least one intermediate step in the direction of a current counterforce ($F_G$) is aligned at least partially as a function of a deformation of the working model (12).

3. Method according to one of the preceding claims, **characterized in that** a deformation of the working model (12) under the counterforce ($F_G$) is simulated.

4. Method according to Claim 3, **characterized in that** a finite element method is used in the simulation.

5. Method according to Claim 4, **characterized by** a subdivision into finite elements, in which at least a plurality of the finite elements divides at most two separation surfaces with adjacent finite elements.

6. Elastic and non-articulated wiper arm (10), **characterized by** a blank form determined by a method according to one of the preceding claims.

**Revendications**

1. Procédé de détermination de la forme brute d'un bras élastique non articulé (10) d'essuie-glace avec définition d'une forme cible que le composant élastique doit prendre sous l'action d'au moins une première force prédéterminée ($F_1$), une force de réaction ($F_G$) au moins essentiellement opposée à la première force prédéterminée ($F_1$) étant appliquée sur un modèle de travail (12) du composant élastique, la forme brute du modèle étant au moins similaire à la forme cible, **caractérisé en ce que**
la force de réaction ($F_G$) est augmentée par pas intermédiaires.

2. Procédé selon la revendication 1, **caractérisé en ce qu'**après au moins un pas intermédiaire, la direction de la force de réaction ($F_G$) actuelle est orientée au moins partiellement en fonction d'une déformation du modèle de travail (12).

3. Procédé selon l'une des revendications précédentes, **caractérisé en ce qu'**une déformation du modèle de travail (12) sous l'action de la force de réaction ($F_G$) est simulée.

4. Procédé selon la revendication 3, **caractérisé en ce que** la simulation utilise une méthode à éléments finis.

5. Procédé selon la revendication 4, **caractérisé par** une division en éléments finis dans laquelle au moins plusieurs des éléments finis séparent au plus deux surfaces de séparation présentant des éléments finis voisins.

6. Bras élastique non articulé (10) d'essuie-glace, **caractérisé par** une forme brute déterminée par un procédé selon l'une des revendications précédentes.

18

14  12

20

14  12

$F_G$

14

22  10

14

24  10

26

Fig. 1

$F_T$

Fig. 2

16'    12

14'    16'    12

Fig. 3

$F_G$

14    16

10

Fig. 4    $F_1$

Fig. 5

Fig. 6

Fig. 7

Fig. 8

Fig. 9

Fig. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 3480985 A

**In der Beschreibung aufgeführte Nicht-Patentliteratur**

- **Dubbel.** Taschenbuch für den Maschinenbau. Springer-Verlag, 1997

- **Klaus-Jürgen Bathe.** Finite-Elemente-Methoden. Springer-Verlag, Dezember 2001